# EUROPEAN PATENT APPLICATION

(11) **EP 4 711 638 A2**
(43) Date of publication of application: **18.03.2026**
(21) Application number: 26154377.1
(22) Date of filing: 14.12.2020
(51) Int. Cl.: F16D 55/228

(54) **VEHICLE DISC BRAKE**

(30) Priority: 12.02.2020 JP 2020021265
(62) Divisional of application: 20918616.2
(71) Applicant: Astemo, Ltd., Chiyoda-ku, Tokyo 1000004 (JP)
(72) Inventor: ATSUTA, Daiki, Hitachinaka-shi, Ibaraki, 3128503 (JP)
(74) Representative: Hoefer & Partner Patentanwälte mbB

(57) **Abstract**

The present invention provides a a vehicle disc brake (1),comprising: a caliper body (3) disposed across a disc rotor (2); a pair of friction pads (4) disposed on both side parts of the disc rotor (2); and a pad spring (5) configured to bias the friction pads (4) inward in a disc radial direction, wherein: the caliper body (3) is provided with a ceiling opening (3f) for inserting and removing the friction pads (4) into and from a bridge part (3b) across an outer periphery of the disc rotor (2), each of the friction pads (4) is provided with a suspension piece (4f) at a central part in a disc circumferential direction (A) in a protruding manner, and is hung to be movable in a disc axial direction by inserting a hanger pin (13), which is suspended in the disc axial direction through the ceiling opening (3f), through the suspension piece (4f), and the pad spring (5) includes: a curved piece (5a) abutting against an inside in the disc radial direction of the hanger pin (13), a run-in side pad spring-back part (5b) extending from the curved piece (5a) to a disc run-in side and configured to press the friction pad (4) inward in the disc radial direction, and a locking piece (5d) provided at a tip of the run-in side pad spring-back part (5b) and locked to an inside in the disc radial direction of a disc run-in side surface of the ceiling opening (3f).

## Description

### Technical Field

The present invention relates to a vehicle disc brake used for a traveling vehicle such as an automobile or a motorcycle, and more particularly, to a vehicle disc brake in which rattling of friction pads that are hung to both side parts of a disc rotor using one hanger pin is prevented by a pad spring.

### Background Art

In the related art, examples of a vehicle disc brake including friction pads that are hung to both side parts of a disc rotor using one hanger pin include a vehicle disc brake in which a ceiling opening for inserting or removing the friction pads into or from a bridge part of a caliper body is provided, suspension pieces protruding toward central parts in a disc circumferential direction of the friction pads are inserted into a hanger pin suspended in a disc axial direction through the ceiling opening, and a pad spring that hangs the friction pads so as to be movable in the disc axial direction, and that prevents rattling of the friction pads is engaged across a back plate of each friction pad, the bridge part, and the hanger pin (for example, see PTL 1).

### Citation list

### Patent Literature

PTL 1: Japanese Patent No. 3729583

### Summary of Invention

### Technical Problem

However, the pad spring according to PTL 1 described above is assembled such that the hanger pin is sandwiched between a curved piece abutting against an inner surface in a disc radial direction of the hanger pin and a cover piece covering outer surfaces in the disc radial direction of the suspension pieces of the friction pads, and therefore, it takes time and effort to assemble the pad spring.

Therefore, an object of the invention is to provide a vehicle disc brake with increased ease of assembly of a pad spring.

### Solution to Problem

In order to solve the above problem, a vehicle disc brake according to the invention includes: a caliper body disposed across a disc rotor; a pair of friction pads disposed on both side parts of the disc rotor; and a pad spring configured to bias the friction pads inward in a disc radial direction, in which the caliper body is provided with a ceiling opening for inserting and removing the friction pads into and from a bridge part across an outer periphery of the disc rotor, each of the friction pad is provided with a suspension piece at a central part in a disc circumferential direction in a protruding manner, and is hung to be movable in a disc axial direction by inserting a hanger pin, which is suspended in the disc axial direction through the ceiling opening, through the suspension piece, the caliper body includes, on an inside in the disc radial direction of a forward-travel disc run-in side surface of the ceiling opening, a locking groove configured to lock the pad spring, and the pad spring includes a curved piece abutting against an inside in the disc radial direction of the hanger pin, a run-in side pad spring-back part extending from the curved piece to a forward-travel disc run-in side and configured to press the friction pad inward in the disc radial direction, a run-out side pad spring-back part extending from the curved piece to a forward-travel disc run-out side and configured to press the friction pad inward in the disc radial direction, and a locking piece provided at a tip of the run-in side pad spring-back part and locked to the locking groove.

In addition, it is preferable that the run-in side pad spring-back part is formed in a curved shape that is convex toward a friction pad side, and includes, on an intermediate part, a run-in side abutting piece having a length that allows the run-in side abutting piece to abut against outer surfaces in the disc radial direction of both friction pads, and the locking piece is formed to be inclined outward in the disc radial direction.

In addition, it is preferable that the friction pad includes, at least on the forward-travel disc run-out side of an outer surface in the disc radial direction, a protrusion part protruding outward in the disc radial direction, the run-out side pad spring-back part is formed in a curved shape that is convex toward a friction pad side, and includes, on a tip, a run-out side abutting piece abutting against a disc run-in side surface of the protrusion part, and the run-out side abutting piece has a length that allows the run-out side abutting piece to abut against the disc run-in side surfaces of the protrusion parts of both friction pads, and includes, on a tip, a protruding piece protruding outward in the disc radial direction.

In addition, it is preferable that the run-in side pad spring-back part includes, on an intermediate part, a run-in side abutting piece abutting against an outer surface in the disc radial direction of the friction pad, a first run-in side inclined piece gradually inclined inward in the disc radial direction from the curved piece toward the run-in side abutting piece, and a second run-in side inclined piece gradually inclined inward in the disc radial direction from the run-in side abutting piece toward the locking piece with an inclination angle gentler than that of the first run-in side inclined piece, in which the run-in side abutting piece has a length that allows the run-in side abutting piece to abut against outer surfaces in the disc radial direction of both friction pads, and is formed to be gradually inclined inward in the disc radial direction and toward a central part in a width direction, and the locking piece is formed to be inclined outward in the disc radial direction.

In addition, it is preferable that the friction pad includes, at least on the forward-travel disc run-out side of an outer surface in the disc radial direction, a protrusion part protruding outward in the disc radial direction, and the run-out side pad spring-back part includes, on a tip, the run-out side abutting piece abutting against the disc run-in side surface of the protrusion part, a first run-out side inclined piece gradually inclined inward in the disc radial direction and toward a tip side on a curved piece side, and a second run-out side inclined piece gradually inclined inward in the disc radial direction from a tip of the first run-out side inclined piece toward the run-out side abutting piece with an inclination angle gentler than that of the first run-out side inclined piece, in which the run-out side abutting piece has a length that allows the run-out side abutting piece to abut against the disc run-in side surfaces of the protrusion parts of both friction pads, and includes, on a tip, a protruding piece protruding outward in the disc radial direction.

In addition, it is preferable that an end part of the curved piece on the disc run-out side is disposed outward in the disc radial direction of an end part of the curved piece on the disc run-in side.

In addition, it is preferable that the curved piece includes, on an end part on the disc run-out side, a flat surface part extending to the disc run-out side.

In addition, it is preferable that one of the run-in side pad spring-back part and the run-out side pad spring-back part is provided with an index indicating an attachment direction.

### Advantageous Effect

According to the vehicle disc brake of the invention, the pad spring can be easily assembled to the caliper body by abutting the curved piece against an inside in the disc radial direction of the hanger pin and locking the locking piece to the locking groove of the caliper body. In addition, by the assembly, the run-in side pad spring-back part and the run-out side pad spring-back part press the friction pads inward in the disc radial direction, and rattling of the friction pads is prevented.

In addition, the run-in side pad spring-back part is formed in a curved shape that is convex toward a friction pad side, and includes, on an intermediate part, a run-in side abutting piece having a length that allows the run-in side abutting piece to abut against outer surfaces in the disc radial direction of both friction pads, and the locking piece is formed to be inclined outward in the disc radial direction, so that the friction pads can be pressed inward in the disc radial direction and toward the disc run-out side, and the rattling of the friction pads can be well prevented. In addition, the pad spring can be reliably locked to the caliper body by inclining the locking piece outward in the disc radial direction. In addition, the run-in side pad spring-back part having a spring-back force can be easily formed by forming the run-in side pad spring-back part in the curved shape.

In addition, the friction pad includes, at least on the forward-travel disc run-out side of an outer surface in the disc radial direction, a protrusion part protruding outward in the disc radial direction, the run-out side pad spring-back part is formed in a curved shape that is convex toward the friction pad side, and includes, on a tip, a run-out side abutting piece abutting against a disc run-in side surface of the protrusion part, and the run-out side abutting piece has a length that allows the run-out side abutting piece to abut against the disc run-in side surfaces of the protrusion parts of both friction pads, and includes, on a tip, a protruding piece protruding outward in the disc radial direction, so that the run-out side pad spring-back part biases the friction pads toward the disc run-out side and inward in the disc radial direction. By biasing the friction pads to the disc run-out side, the friction pads are in a state of abutting against a torque receiving surface provided on the caliper body in advance, and abutting noise generated by abutting the friction pads against the torque receiving surface can be prevented. In addition, the rattling of the friction pads can be prevented by biasing the friction pads inward in the disc radial direction. In addition, a run-out side pad spring-back part having a spring-back force can be easily formed by forming the run-out side pad spring-back part in the curved shape.

In addition, the run-in side pad spring-back part includes, on the intermediate part, the run-in side abutting piece abutting against the outer surfaces in the disc radial direction of the friction pads, the first run-in side inclined piece gradually inclined inward in the disc radial direction from the curved piece toward the run-in side abutting piece, and a second run-in side inclined piece gradually inclined inward in the disc radial direction from the run-in side abutting piece toward the locking piece with the inclination angle gentler than that of the first run-in side inclined piece, in which the run-in side abutting piece has a length that allows the run-in side abutting piece to abut against the outer surfaces in the disc radial direction of both friction pads, and is formed to be gradually inclined inward in the disc radial direction and toward the central part in the width direction, and the locking piece is formed to be inclined outward in the disc radial direction, so that the friction pads cab be pressed inward in the disc radial direction and toward the disc run-out side, and the rattling of the friction pads can be well prevented. In addition, the pad spring can be reliably locked to the caliper body by inclining the locking piece outward in the disc radial direction. In addition, it is possible to easily perform setting and setting change of the spring-back force by changing the inclination angles and the lengths of the first run-in side inclined piece and the second run-in side inclined piece.

In addition, the friction pad includes, at least on the forward-travel disc run-out side of an outer surface in the disc radial direction, the protrusion part protruding outward in the disc radial direction, the run-out side pad spring-back part includes, on a tip, the run-out side abutting piece abutting against the disc run-in side surface of the protrusion part, a first run-out side inclined piece gradually inclined inward in the disc radial direction and toward a tip side on a curved piece side, and a second run-out side inclined piece gradually inclined inward in the disc radial direction from a tip of the first run-out side inclined piece toward the run-out side abutting piece with an inclination angle gentler than that of the first run-out side inclined piece, in which the run-out side abutting piece has a length that allows the run-out side abutting piece to abut against the disc run-in side surfaces of the protrusion parts of both friction pads, and includes, on the tip, the protruding piece protruding outward in the disc radial direction, so that the friction pads are in a state of abutting against the torque receiving surface provided on the caliper body in advance, and the abutting noise generated by abutting the friction pads against the torque receiving surface can be prevented. In addition, the rattling of the friction pads can be prevented by biasing the friction pads inward in the disc radial direction. In addition, by changing the inclination angles and the lengths of the first run-out side inclined piece and the second run-out side inclined piece, it is possible to easily perform setting and setting change of the spring-back force.

In addition, the protrusion parts protruding outward in the disc radial direction are provided on the friction pads, and the run-out side pad spring-back part is provided with the run-out side abutting piece abutting against the disc run-in side surfaces of the protrusion parts, so that the run-out side pad spring-back part biases the friction pads toward the disc run-out side and inward in the disc radial direction. By biasing the friction pads to the disc run-out side, the friction pads are in a state of abutting against the torque receiving surface provided on the caliper body in advance, and the abutting noise generated by abutting the friction pads against the torque receiving surface can be prevented. In addition, the rattling of the friction pads can be prevented by biasing the friction pads inward in the disc radial direction.

In addition, by disposing the end part of the curved piece on the disc run-out side outward in the disc radial direction of the end part on the disc run-in side, positions in the disc radial direction of the end part of the curved piece on the disc run-in side to which stress is applied at the time of assembly and the end part of the curved piece on the disc run-out side to which stress is applied at the time of vehicle vibration and braking can be shifted, and durability can be improved.

In addition, by providing the flat surface part extending to the disc run-out side on the end part of the curved piece on the disc run-out side, stress generated on the disc run-out side of the curved piece of the pad spring can be prevented from concentrating on the curved piece, and durability of the pad spring can be improved.

In addition, erroneous assembly of the pad spring can be prevented by providing the index indicating the attachment direction to one of the run-in side pad spring-back part and the run-out side pad spring-back part.

### Brief Description of Drawings

[FIG. 1] FIG. 1 is a front view of a vehicle disc brake illustrating an embodiment according to the invention.
[FIG. 2] FIG. 2 is a plan view of the vehicle disc brake.
[FIG. 3] FIG. 3 is a cross-sectional view taken along line III-III in FIG. 2.
[FIG. 4] FIG. 4 is a cross-sectional view taken along line IV-IV in FIG. 1.
[FIG. 5] FIG. 5 is a perspective view of a pad spring illustrating an embodiment according to the invention.

### Description of Embodiments

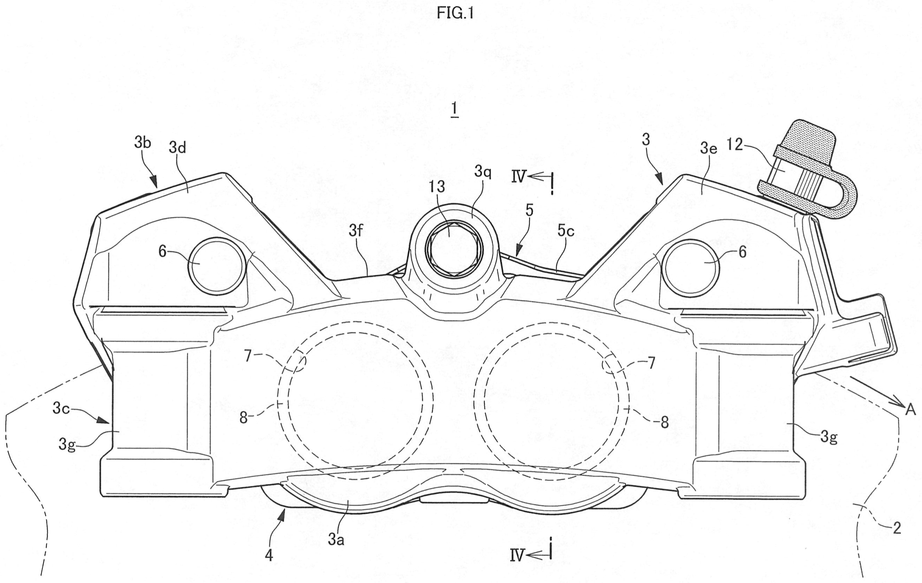

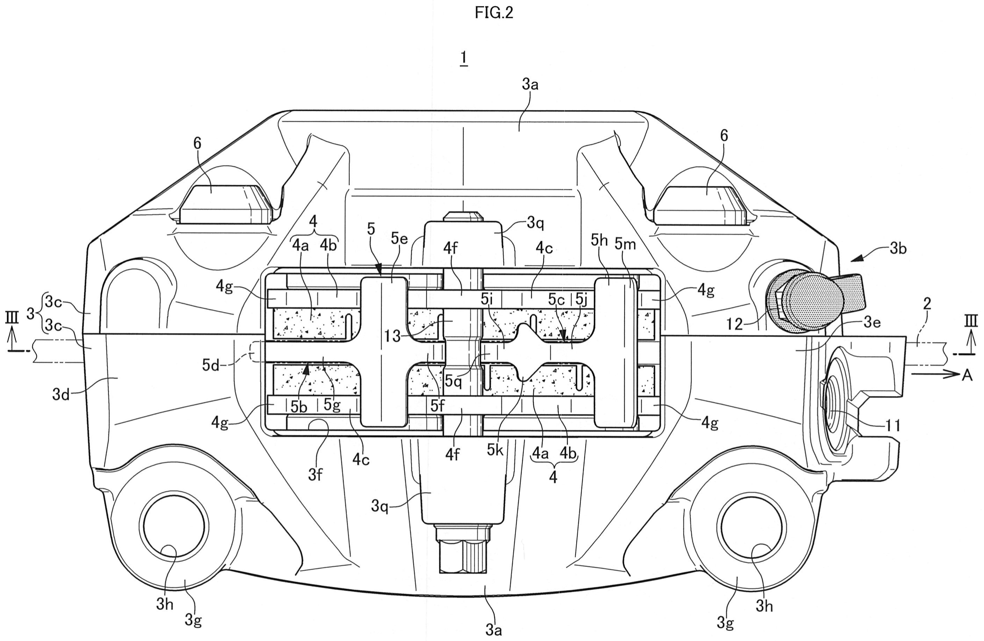

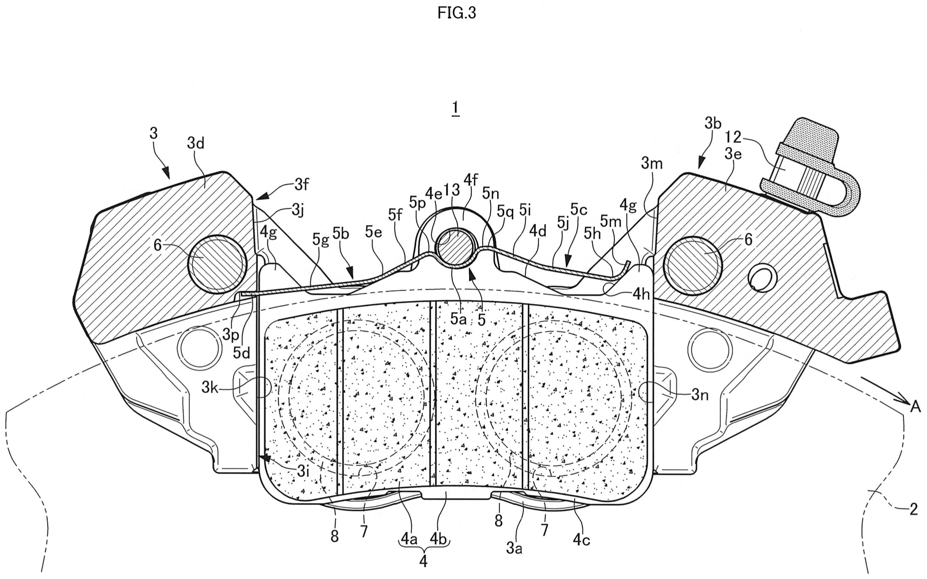

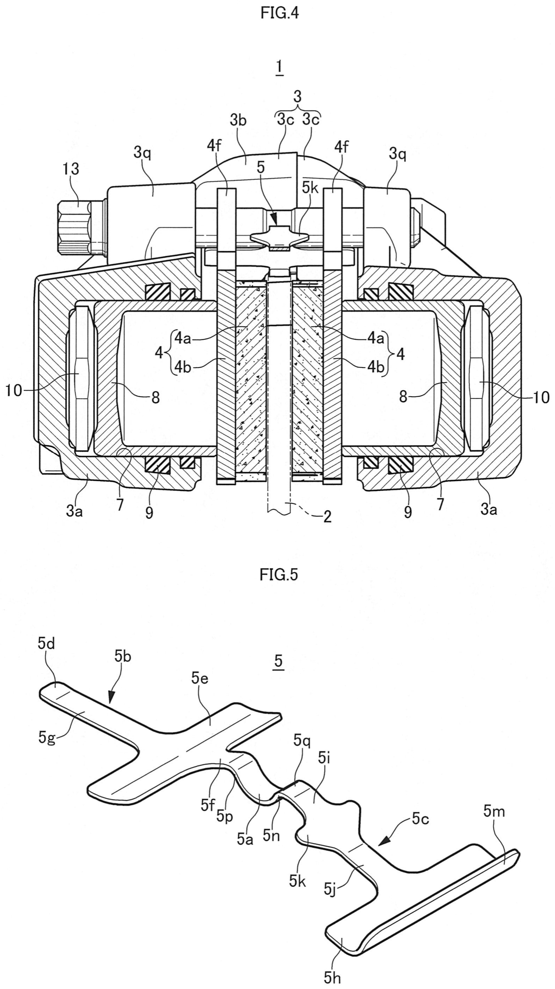

FIGS. 1 to 5 are views illustrating one embodiment of a vehicle disc brake according to the invention. An arrow A indicates a rotation direction of a disc rotor that rotates integrally with a wheel when a vehicle is traveling forward, and a disc run-out side and a disc run-in side to be described below are assumed as sides when the vehicle is traveling forward.

A vehicle disc brake 1 according to the present embodiment includes a disc rotor 2 that rotates integrally with a wheel (not shown), a caliper body 3 attached to a vehicle body on one side of the disc rotor 2, a pair of friction pads 4, 4 disposed to face each other between action parts 3a, 3a of the caliper body 3 with the disc rotor 2 being sandwiched therebetween, and a pad spring 5 that prevents rattling of the friction pads 4, 4.

The caliper body 3 is formed by coupling bolts 6, 6 integrally connecting a pair of caliper half bodies 3c, 3c divided at an intermediate part of a bridge part 3b. The bridge part 3b includes a disc run-in side bridge part 3d, a disc run-out side bridge part 3e, and a ceiling opening 3f that is provided between the disc run-in side bridge part 3d and the disc run-out side bridge part 3e and through which the friction pads 4, 4 are inserted and removed. Each of the action parts 3a, 3a is provided with cylinder holes 7 opened on a disc rotor side with two cylinder holes 7 facing each other, each cylinder hole 7 houses a piston 8 via a piston seal 9, and a hydraulic chamber 10 to which an acting fluid is supplied is defined between a bottom of each cylinder hole 7 and each piston 8.

Attachment boss parts 3g, 3g in a disc radial direction are formed on a disc run-in side and a disc run-out side of one action part 3a, each attachment boss part 3g is provided with an attachment bolt inserting hole 3h in the disc radial direction, and the caliper body 3 is attached to the vehicle body by screwing attachment bolts (not shown), which are inserted through the attachment bolt inserting holes 3h, into caliper attachment parts provided on a vehicle body side. In addition, the disc run-out side bridge part 3e is provided with a union hole 11 for introducing the acting fluid into the hydraulic chambers 10, 10, and a bleeder screw 12 for discharging air mixed in the acting fluid.

Friction pad housing parts 3i, 3i that house the friction pads 4, 4 are formed in the action parts 3a, 3a respectively. Each friction pad housing part 3i has a run-in side torque receiving surface 3k formed on an inside in the disc radial direction of a disc run-in side surface 3j of the ceiling opening 3f, and a run-out side torque receiving surface 3n formed on the inside in the disc radial direction of a disc run-outer surface 3m of the ceiling opening 3f. In addition, a locking groove 3p for locking the pad spring 5 is formed on the inside in the disc radial direction of a central part in a disc axial direction of the disc run-in side bridge part 3d. In addition, ridged parts 3q, 3q to which a hanger pin 13 is mounted are formed, with the ceiling opening 3f sandwiched therebetween, on an outside in the disc radial direction and at central parts in a disc rotation direction of the action parts 3a, 3a.

Each of the friction pads 4, 4 includes a lining 4a that is in sliding contact with a side surface of the disc rotor 2, and a back plate 4b that is held by the caliper body 3 via one hanger pin 13. A main body part 4c of the back plate 4b to which the lining 4a is attached is formed slightly narrower than an interval between the run-in side torque receiving surface 3k and the run-out side torque receiving surface 3n, and on a disc radially outer surface 4d, a suspension piece 4f having a pin hole 4e at a central part is provided with protrusion parts 4g, 4g protruding outward in the disc radial direction on both side parts in the disc rotation direction, respectively.

The friction pad 4 inserted from the ceiling opening 3f is configured such that the main body part 4c of the back plate is housed in the friction pad housing part 3i, and the hanger pin 13 disposed in the disc axial direction on the ridged parts 3q, 3q of the action parts 3a, 3a through the ceiling opening 3f is inserted into the pin hole 4e of the suspension piece 4f, so that the friction pad is hung to be movable in the disc axial direction. In addition, the pad spring 5 is engaged over the back plate 4b, the disc run-in side bridge part 3d, and the hanger pin 13.

The pad spring 5 includes a curved piece 5a abutting against an inside in the disc radial direction of the hanger pin 13, a run-in side pad spring-back part 5b extending from the curved piece 5a to a disc run-in side and pressing the friction pads 4, 4 inward in the disc radial direction, a run-out side pad spring-back part 5c extending from the curved piece 5a to a disc run-out side and pressing the friction pads 4, 4 inward in the disc radial direction and toward the disc run-out side, and a locking piece 5d provided at a tip of the run-in side pad spring-back part 5b and locked in the locking groove 3p.

The run-in side pad spring-back part 5b includes, on an intermediate part, a run-in side abutting piece 5e abutting against outer surfaces in the disc radial direction of the friction pads 4, 4, a first run-in side inclined piece 5f gradually inclined inward in the disc radial direction from the curved piece 5a toward the run-in side abutting piece 5e, and a second run-in side inclined piece 5g gradually inclined inward in the disc radial direction from the run-in side abutting piece 5e to the locking piece 5d with an inclination angle gentler than that of the first run-in side inclined piece 5f. In addition, the run-in side abutting piece 5e has a length that allows the run-in side abutting piece 5e to abut against the disc radially outer surfaces 4d, 4d of both friction pads 4, 4, and is formed to be gradually inclined inward in the disc radial direction toward a central part in a width direction. In addition, the locking piece 5d is formed to be inclined outward in the disc radial direction.

The run-out side pad spring-back part 5c includes, on a tip, a run-out side abutting piece 5h abutting against disc run-in side surfaces 4h, 4h of the protrusion parts 4g, 4g on the disc run-out side, which are provided on the friction pads 4, 4, a first run-out side inclined piece 5i gradually inclined inward in the disc radial direction from a curved piece 5a side toward a tip side, and a second run-out side inclined piece 5j gradually inclined inward in the disc radial direction from a tip of the first run-out side inclined piece 5i toward the run-out side abutting piece 5h with an inclination angle gentler than that of the first run-out side inclined piece 5i. In addition, an intermediate part of the run-out side abutting piece 5h is provided with an index 5k protruding in the width direction. The run-out side abutting piece 5h has a length that allows the run-out side abutting piece 5h to abut against the disc run-in side surfaces 4h, 4h of the protrusion parts 4g, 4g of both friction pads 4, 4, and includes, on a tip, a protruding piece 5m protruding outward in the disc radial direction.

An end part 5n of the curved piece 5c on the disc run-out side is disposed on the outside in the disc radial direction of an end part 5p on the disc run-in side. In addition, the curved piece 5a includes, on the end part on the disc run-out side, a flat surface part 5q extending to the disc run-out side.

The pad spring 5 formed as described above is easily attached to the caliper body 3 by inserting the pad spring 5 into the caliper body 3 from the ceiling opening 3f, locking the locking piece 5d to the locking groove 3p formed in the caliper body 3, and inserting the hanger pin 13 through pin holes formed in the ridged parts 3q, 3q of the caliper body 3 and the pin hole 4e formed in the suspension piece 4f of the friction pad 4 while applying a load to the pad spring 5. In addition, the pad spring 5 can be reliably locked to the caliper body 3 by inclining the locking piece 5 outward in the disc radial direction. In addition, by the assembly, the run-out side abutting piece 5e of the pad spring 5 abuts against the disc radially outer surfaces 4d, 4d of the back plates 4b, 4b to press the friction pads 4, 4 inward in the disc radial direction, and the run-out side abutting piece 5h abuts against the disc run-in side surfaces 4h, 4h of the protrusion parts 4g, 4g of the back plates 4b, 4b.

The run-in side abutting piece 5e of the run-in side pad spring-back part 5b abuts against the disc radially outer surfaces 4d, 4d of the friction pads 4, 4, and biases the friction pads 4, 4 to the disc run-out side and inward in the disc radial direction. In addition, the run-out side abutting piece 5h of the run-out side pad spring-back part 5c abuts against the disc run-in side surfaces 4h, 4h of the protrusion parts 4g, 4g, and biases the friction pads 4, 4 to the disc run-out side and inward in the disc radial direction. By biasing the friction pads 4, 4 to the disc run-out side, as described above, the back plates 4b, 4b of the friction pads 4, 4 are in a state of abutting against the run-out side torque receiving surface 3n in advance, and abutting noise generated by abutting the back plates 4b, 4b against the run-out side torque receiving surface 3n can be prevented. In addition, rattling of the friction pads 4, 4 can be prevented by biasing the friction pads 4, 4 inward in the disc radial direction.

In addition, the end part 5n of the curved piece 5a on the disc run-out side is disposed on the outside in the disc radial direction of the end part 5p on the disc run-in side, positions in the disc radial direction of the end part 5n of the curved piece 5a on the disc run-in side to which stress is applied at the time of assembly and the end part 5p of the curved piece 5a on the disc run-out side to which stress is applied at the time of vehicle vibration and braking can be shifted, and durability of the pad spring 5 can be improved. In addition, by providing the flat surface part 5q extending to the disc run-out side on the end part 5n of the curved piece 5a on the disc run-out side, stress generated on the disc run-out side of the curved piece 5a of the pad spring 5 can be prevented from concentrating on the curved piece 5a. In addition, erroneous assembly of the pad spring 5 can be prevented by providing the index 5k indicating an attachment direction on the run-out side pad spring-back part 5c. In addition, it is possible to easily perform setting and setting change of the spring-back force by changing the inclination angles and the lengths of the first run-in side inclined piece, the second run-in side inclined piece, the first run-out side inclined piece, and the second run-out side inclined piece.

The invention is not limited to the above embodiment, and each of the friction pads may be provided with a protrusion part only on the disc run-out side of the outer surface in the disc radial direction. In addition, the pad spring may be provided even if the end part of the curved piece on the disc run-out side is not disposed on the outside in the disc radial direction of the end part on the disc run-in side. In addition, the flat surface part extending to the disc run-out side may not be provided on the end part of the curved piece on the disc run-out side. In addition, the pad spring may be provided with an index indicating the attachment direction to the run-in side pad spring-back part, or the index may not be provided.

In addition, the run-in side pad spring-back part and the run-out side pad spring-back part of the pad spring may be formed in a curved shape that is convex toward the friction pad side, and the pad spring is easily formed by forming the run-in side pad spring-back part and the run-out side pad spring-back part in the curved shape.
The present invention is further elucidated based on the following clauses:
[Clause 1] A vehicle disc brake comprising:
   a caliper body disposed across a disc rotor;
   a pair of friction pads disposed on both side parts of the disc rotor; and
   a pad spring configured to bias the friction pads inward in a disc radial direction, wherein
   the caliper body is provided with a ceiling opening for inserting and removing the friction pads into and from a bridge part across an outer periphery of the disc rotor,
   each of the friction pad is provided with a suspension piece at a central part in a disc circumferential direction in a protruding manner, and is hung to be movable in a disc axial direction by inserting a hanger pin, which is suspended in the disc axial direction through the ceiling opening, through the suspension piece,
   the caliper body includes, on an inside in the disc radial direction of a forward-travel disc run-in side surface of the ceiling opening, a locking groove configured to lock the pad spring, and
   the pad spring includes a curved piece abutting against an inside in the disc radial direction of the hanger pin, a run-in side pad spring-back part extending from the curved piece to a forward-travel disc run-in side and configured to press the friction pad inward in the disc radial direction, a run-out side pad spring-back part extending from the curved piece to a forward-travel disc run-out side and configured to press the friction pad inward in the disc radial direction, and a locking piece provided at a tip of the run-in side pad spring-back part and locked to the locking groove.
[Clause 2] The vehicle disc brake according to clause 1, wherein
   the run-in side pad spring-back part is formed in a curved shape that is convex toward a friction pad side, and includes, on an intermediate part, a run-in side abutting piece having a length that allows the run-in side abutting piece to abut against outer surfaces in the disc radial direction of both friction pads, and the locking piece is formed to be inclined outward in the disc radial direction.
[Clause 3] The vehicle disc brake according to clause 1 or 2, wherein
   the friction pad includes, at least on the forward-travel disc run-out side of an outer surface in the disc radial direction, a protrusion part protruding outward in the disc radial direction,
   the run-out side pad spring-back part is formed in a curved shape that is convex toward a friction pad side, and includes, on a tip, a run-out side abutting piece abutting against a disc run-in side surface of the protrusion part, and
   the run-out side abutting piece has a length that allows the run-out side abutting piece to abut against the disc run-in side surfaces of the protrusion parts of both friction pads, and includes, on a tip, a protruding piece protruding outward in the disc radial direction.
[Clause 4] The vehicle disc brake according to clause 1, wherein
   the run-in side pad spring-back part includes, on an intermediate part, a run-in side abutting piece abutting against an outer surface in the disc radial direction of the friction pad, a first run-in side inclined piece gradually inclined inward in the disc radial direction from the curved piece toward the run-in side abutting piece, and a second run-in side inclined piece gradually inclined inward in the disc radial direction from the run-in side abutting piece toward the locking piece with an inclination angle gentler than that of the first run-in side inclined piece, in which the run-in side abutting piece has a length that allows the run-in side abutting piece to abut against outer surfaces in the disc radial direction of both friction pads, and is formed to be gradually inclined inward in the disc radial direction and toward a central part in a width direction, and the locking piece is formed to be inclined outward in the disc radial direction.
[Clause 5] The vehicle disc brake according to clause 1 or 4, wherein
   the friction pad includes, at least on the forward-travel disc run-out side of an outer surface in the disc radial direction, a protrusion part protruding outward in the disc radial direction, and
   the run-out side pad spring-back part includes, on a tip, a run-out side abutting piece abutting against a disc run-in side surface of the protrusion part, a first run-out side inclined piece gradually inclined inward in the disc radial direction and toward a tip side on a curved piece side, and a second run-out side inclined piece gradually inclined inward in the disc radial direction from a tip of the first run-out side inclined piece toward the run-out side abutting piece with an inclination angle gentler than that of the first run-out side inclined piece, in which the run-out side abutting piece has a length that allows the run-out side abutting piece to abut against the disc run-in side surfaces of the protrusion parts of both friction pads, and includes, on a tip, a protruding piece protruding outward in the disc radial direction.
[Clause 6] The vehicle disc brake according to any one of clauses 1 to 5, wherein
   an end part of the curved piece on the disc run-out side is disposed outward in the disc radial direction of an end part of the curved piece on the disc run-in side.
[Clause 7] The vehicle disc brake according to any one of clauses 1 to 5, wherein
   the curved piece includes, on an end part on the disc run-out side, a flat surface part extending to the disc run-out side.
[Clause 8] The vehicle disc brake according to any one of clauses 1 to 7, wherein
   one of the run-in side pad spring-back part and the run-out side pad spring-back part is provided with an index indicating an attachment direction.

### Reference Sign List

- 1:: vehicle disc brake
- 2:: disc rotor
- 3:: caliper body
- 3a:: action part
- 3b:: bridge part
- 3c:: caliper half body
- 3d:: disc run-in side bridge part
- 3e:: disc run-out side bridge part
- 3f:: ceiling opening
- 3g:: attachment boss part
- 3h:: attachment bolt inserting hole
- 3i:: friction pad housing part
- 3j:: disc run-in side surface
- 3k:: run-in side torque receiving surface
- 3m:: disc run-out side surface
- 3n:: run-out side torque receiving surface
- 3p:: locking groove
- 3q:: ridged part
- 4:: friction pad
- 4a:: lining
- 4b:: back plate
- 4c:: main body part
- 4d:: disc radially outer surface
- 4e:: pin hole
- 4f:: suspension piece
- 4g:: protrusion part
- 4h:: disc run-in side surface
- 5:: pad spring
- 5a:: curved piece
- 5b:: run-in side pad spring-back part
- 5c:: run-out side pad spring-back part
- 5d:: locking piece
- 5e:: run-in side abutting piece
- 5f:: first run-in side inclined piece
- 5g:: second run-in side inclined piece
- 5h:: run-out side abutting piece
- 5i:: first run-out side inclined piece
- 5j:: second run-out side inclined piece
- 5k:: index
- 5m:: protruding piece
- 5n, 5p:: end part
- 5q:: flat surface part
- 6:: coupling bolt
- 7:: cylinder hole
- 8:: piston
- 9:: piston seal
- 10:: hydraulic chamber
- 11:: union hole
- 12:: bleeder screw
- 13:: hanger pin

## Claims

1. A vehicle disc brake (1),
comprising:
- a caliper body (3) disposed across a disc rotor (2);
- a pair of friction pads (4) disposed on both side parts of the disc rotor (2); and
- a pad spring (5) configured to bias the friction pads
(4) inward in a disc radial direction,
wherein:
- the caliper body (3) is provided with a ceiling opening (3f) for inserting and removing the friction pads (4) into and from a bridge part (3b) across an outer periphery of the disc rotor (2),
- each of the friction pads (4) is provided with a suspension piece (4f) at a central part in a disc circumferential direction (A) in a protruding manner, and is hung to be movable in a disc axial direction by inserting a hanger pin (13), which is suspended in the disc axial direction through the ceiling opening (3f), through the suspension piece (4f), and
- the pad spring (5) includes:
- a curved piece (5a) abutting against an inside in the disc radial direction of the hanger pin (13),
- a run-in side pad spring-back part (5b) extending from the curved piece (5a) to a disc run-in side and configured to press the friction pad (4) inward in the disc radial direction, and
- a locking piece (5d) provided at a tip of the run-in side pad spring-back part (5b) and locked to an inside in the disc radial direction of a disc run-in side surface of the ceiling opening (3f).

2. The vehicle disc brake (1) according to claim 1, wherein:
- the run-in side pad spring-back part (5b) includes, on an intermediate part, a run-in side abutting piece (5e) having a length that allows the run-in side abutting piece (5e) to abut against outer surfaces in the disc radial direction of both friction pads (4).

3. The vehicle disc brake (1) according to claim 1 or 2, wherein
- the pad spring (5) includes a run-out side pad spring-back part (5c) extending from the curved piece (5a) to a disc run-out side and configured to press the friction pad (4) inward in the disc radial direction,- each of the friction pads (4) includes, at least on the disc run-out side of an outer surface in the disc radial direction, a protrusion part (4g) protruding outward in the disc radial direction,
- the run-out side pad spring-back part (5c):
- is formed in a curved shape that is convex toward a friction pad side, and
- includes, on a tip, a run-out side abutting piece (5h) abutting against a disc run-in side surface of the protrusion part (4g), and
- the run-out side abutting piece (5h):
- has a length that allows the run-out side abutting piece (5h) to abut against the disc run-in side surfaces of the protrusion parts (4g) of both friction pads (4), and
- includes, on a tip, a protruding piece (5m) protruding outward in the disc radial
direction.

4. The vehicle disc brake (1) according to claim 1, wherein:
- the run-in side pad spring-back part (5b) includes, on an intermediate part,
- a run-in side abutting piece (5e) abutting against an outer surface in the disc radial direction of the friction pad (4),
- a first run-in side inclined piece (5f) gradually inclined inward in the disc radial direction from the curved piece (5a) toward the run-in side abutting piece (5e),
and
- a second run-in side inclined piece (5g) gradually inclined inward in the disc radial direction from the run-in side abutting piece (5e) toward the locking piece (5d) with an inclination angle gentler than that of the first run-in side inclined piece (5f),
- the run-in side abutting piece (5e):
- has a length that allows the run-in side abutting piece (5e) to abut against outer surfaces in the disc radial direction of both friction pads (4), and
- is formed to be gradually inclined inward in the disc radial direction and toward a central part in a width direction, and
- the locking piece (5d) is formed to be inclined outward in the disc radial direction.

5. The vehicle disc brake (1) according to claim 1 or 4, wherein:
- the caliper body (3) includes, on an inside in the disc radial direction of a disc run-in side surface of the ceiling opening (3f), a locking groove (3p) configured to lock the pad spring (5), and
- the locking piece (5d) is formed to be inclined outward in the disc radial direction

6. The vehicle disc brake (1) according to any one of claims 1 to 5, wherein an end part of the curved piece (5a) on the disc run-out side is disposed outward in the disc radial direction of an end part of the curved piece (5a) on the disc run-in side.

7. The vehicle disc brake (1) according to any one of claims 1 to 5, wherein the curved piece (5a) includes, on an end part on the disc run-out side, a flat surface part (5q) extending to the disc run-out side.

8. The vehicle disc brake (1) according to any one of claims 1 to 7, wherein one of the run-in side pad spring-back part (5b) and the run-out side pad spring-back part (5c) is provided with an index (5k) indicating an attachment direction.
